Europäisches Patentamt

European Patent Office

Office européen des brevets

(11) Veröffentlichungsnummer: **0 498 910 A1**

# EUROPÄISCHE PATENTANMELDUNG

(21) Anmeldenummer: **91102027.9**

(22) Anmeldetag: **13.02.91**

(51) Int. Cl.5: **H04L 12/12**, H04L 12/40

(43) Veröffentlichungstag der Anmeldung:
**19.08.92 Patentblatt 92/34**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Kleemeier, Manfred, Dipl.-Ing. (FH)**
**Max-Planck-Strasse 2**
**W-8402 Neutraubling(DE)**
Erfinder: **Schmid, Reinhard, Dipl.-Ing. (UNI)**
**Neuprüll 20**
**W-8400 Regensburg(DE)**

(54) Einrichtung der Gebäudesystemtechnik.

(57) Einrichtung der Gebäudesystemtechnik, wonach Stationen über Bus (5) Informationen senden und empfangen, gegebenenfalls auch Informationen von externen Befehlsgebern empfangen und gegebenenfalls Befehle an Arbeitsglieder abgeben. Es ist vorgesehen, daß dem Sender (1) und dem Empfänger (2) einer Station jeweils ein einfach aufgebauter Eingangskreis (3) nach dem Prinzip eines elektromechanischen oder elektronischen, gegebenenfalls mehrpoligen Schalters auf der Eingangsseite zum Bus (5) vorgeschaltet ist,
- der beim Sender (1) mit zumindest einem Aktor (6) über einen Aktivierungsweg (7) verbunden ist und der mit dem Prozessor (4) der Station gegebenenfalls unmittelbar oder mittelbar über einen Quittierweg (8) verbunden ist
- und der beim Empfänger (2) mit einer zentralen Koppelstelle (10) über einen Weg (12) für ein Vorsignal verbunden ist.

FIG 1

EP 0 498 910 A1

Die Erfindung bezieht sich auf eine Einrichtung der Gebäudesystemtechnik, wonach Stationen über Bus Informationen senden und empfangen, im einzelnen nach Gattungsbegriff von Patentanspruch 1. Dabei können auch Informationen von externen Befehlsgebern empfangen werden und es können auch Befehle an Arbeitsglieder abgegeben werden.

In der Gebäudesystemtechnik sind die Funktionen weniger durch den Aufbau der Geräte, sondern mehr durch Programme festgelegt. Das hat den Vorteil, daß die Komponenten des Systems in ihren Funktionen leicht zu ändern und anzupassen sind. Diese Vorteile werden durch massiven Einsatz von Mikroelektrionik bzw. Prozessoren in den Komponenten des Systems ermöglicht. Durch den in der Installationstechnik üblichen Dauerbetrieb wirkt sich die Ausfallrate einzelner Bauelemente jedoch gehäuft in Ausfällen der Komponenten und Teile des Systems aus.

Der Erfindung liegt die Aufgabe zugrunde, eine Einrichtung für die Gebäudesystemtechnik zu entwickeln, bei der die Ausfallrate der Komponenten deutlich reduziert ist.

Die Lösung der geschilderten Aufgabe erfolgt durch eine Einrichtung nach Patentanspruch. Dem Sender und dem Empfänger einer Station, bzw. dem Sender oder dem Empfänger einer Station, wird danach jeweils ein einfach aufgebauter Eingangskreis nach dem Prinzip eines elektromechanischen oder elektronischen, gegebenenfalls mehrpoligen Schalters vorgeschaltet. Bei einem Sender ist dieser zumindest mit einem Aktor über einen Aktivierungsweg verbunden. Dieser Weg kann durch eine elektrische Leitung oder auch lediglich durch Software realisiert sein. Mit dem Prozessor der Station ist der Eingangskreis weiter unmittelbar oder mittelbar über einen Quittierweg verbunden. Ein solcher Weg kann durch Leitung oder auch wieder durch Software verwirklicht werden. Bei einem Empfänger ist sein Eingangskreis mit der zentralen Koppelstelle über einen Weg für ein Vorsignal verbunden. Dieser Weg kann eine elektrische Leitung oder auch der Bus des Systems sein oder er kann durch Software anderweitig realisiert sein. Durch Vermindern der Einschaltdauer bei vorgegebener Ausfallrate wird entsprechend der eingesetzten Bauteile die sogenannte Überlebenswahrscheinlichkeit der Komponenten und der Teile des Systems erhöht.

Ein ähnliches Prinzip ist an sich aus der Unterhaltungselektronik durch Stand-by-Betrieb bekannt. Im Vordergrund stand dort jedoch die Sofortbereitschaft. Durch die Erfindung wird es ermöglicht, bei der Gebäudesystemtechnik und der Verbindung von Stationen über Bus, dieses bekannte Prinzip mit geringem Aufwand und ohne erforderlichen Eingriff durch Bedienungspersonen zu verwirklichen.

Die Erfindung soll nun anhand von in der Zeichnung grob schematisch wiedergegebenen Ausführungsbeispielen näher erläutert werden:

In FIG 1 ist ein Sender für eine Einrichtung der Gebäudesystemtechnik veranschaulicht.

In FIG 2 ist ein Empfänger einer Einrichtung der Gebäudesystemtechnik nach Art eines Blockschaltdiagramms dargestellt.

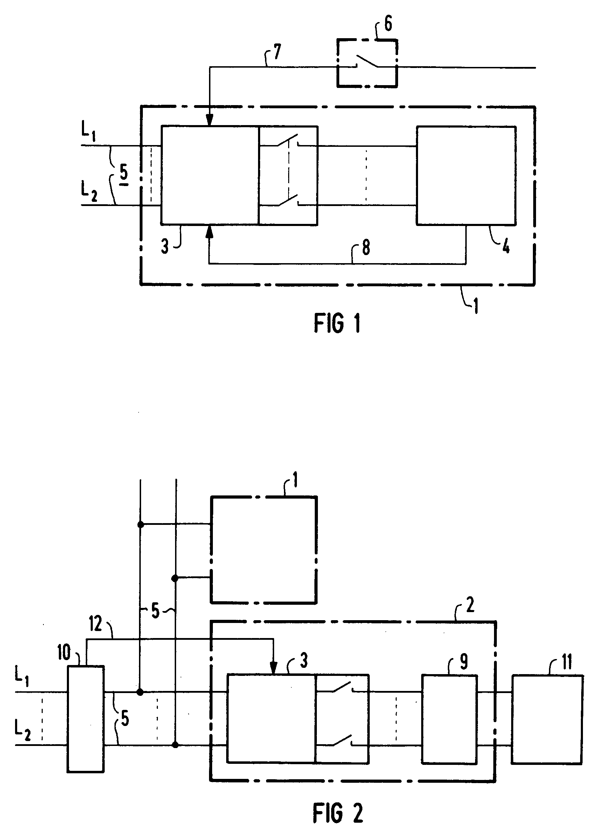

Der Sender 1 nach Figur 1 und der Empfänger 2 nach Figur 2 können in einer Einrichtung der Gebäudesystemtechnik gemeinsam untergebracht sein. Sie können miteinander auch so funktionell verknüpft sein, daß sie bauteilmäßig nicht zu trennen sind. Der Sender 1 nach Figur 1 weist einen Eingangskreis 3 auf, der einem Prozessor 4 des Senders auf der Eingangsseite zum Bus 5 vorgeschaltet ist. Der Eingangskreis 3 ist mit einem Aktor 6, beispielsweise einem Taster, über einen Aktivierungsweg 7 verbunden. Der Eingangskreis 3 ist mit dem Prozessor 4 der Station unmittelbar über einen Quittierweg 8 verbunden.

Wenn der Aktor 6 betätigt wird, ein Taster beispielsweise niedergedrückt wird, oder wenn ein Grenzwert überschritten wird, beispielsweise bei einem Windgeschwindigkeitssensor, wird der Eingangskreis 3 erregt. Er aktiviert dann seinerseits den nachgeschalteten Teil der Station, im Ausführungsbeispiel den Prozessor 4 des Senders. Diese Aktivierung kann beispielsweise so erfolgen, daß eine Versorgungsspannung zugeschaltet wird. Der Sender ist dann zum Absenden einer Information, häufig auch Protokoll genannt, für eine bestimmte Zeitdauer eingeschaltet. Die Einschaltdauer kann über den Quittierweg begrenzt werden, in dem der Prozessor 4 dem Eingangskreis 3 mitteilt, wenn die Information abgegeben ist. Der Eingangskreis 3 schaltet dann den aktiven Teil des Senders einer Station des Bussystems ab. Gegebenenfalls kann man auch mit vorgegebenen Zeitrahmen arbeiten, wodurch dann ein Quittierweg entbehrlich wird. Dieser Zeitrahmen ist dann nach den längsten Informationen auszulegen, so daß nicht alle Möglichkeiten des Systems ausgeschöpft werden.

Bei einem Empfänger 2 nach Figur 2 ist der Eingangskreis 3 einem Prozessor 9 des Empfängers einer Station vorgeschaltet. Ein Teil der Busleitung 5 ist in der Zeichnung veranschaulicht. Der Bus 5 verbindet den Eingangskreis 3 mit einer zentralen Koppelstelle 10 des Systems und mit einem Sender 1 einer anderen Station im System der Gebäudesystemtechnik. Im Ausführungsbeispiel ist dem Empfänger 2 ein Arbeitsglied 11 nachgeschaltet, beispielsweise ein Lastschalter oder bistabiles Relais. Über einen Weg 12 wird von der zentralen Koppelstelle 10 ein Vorsignal an den Eingangskreis 3 des Empfängers 2 gegeben, wenn dieser aktiviert werden soll. Der Weg 12 für das Vorsignal kann eine eigene Leitung sein, wird vorteilhafterweise aber nur ein Signal sein, das im Bus 5 von der zentralen Koppelstelle 10 an den Eingangskreis 3 abgegeben wird. Den Befehl für das Vorsignal kann der Sender 1 einer ander Station abgeben. Die zentrale Koppelstelle 10 kann ihrerseits so ausgelegt sein, daß sie nur für die erforderliche Betriebszeit aktiviert wird.

Wenn von der zentralen Koppelstelle 10 an den Eingangskreis 3 eines Empfängers 2 das Vorsignal abgegeben wird, erzielt man die Aktivierung des Eingangskreises 3. Dadurch wird die nachgeschaltete komplexe Elektronik, beispielsweise der Prozessor 9 des Empfängers 2 aktiviert. Dies kann beispielsweise durch Zuschalten der Versorgungsspannung verwirklicht werden. Der Empfänger bzw. sein Prozessor 9 ist dann für den Empfang von Informationen vorbereitet. Man spricht hier auch vom Empfang von Befehlsprotokollen. Die Station mit dem Empfänger 2, also ein Busteilnehmer, kann nun für ihn bestimmte Informationen empfangen und verarbeiten und gegebenenfalls auch quittieren. Nach Ablauf einer vorgewählten Zeit oder nach einem Schlußsignal geht der Empfänger wieder in den deaktivierten Zustand über. Die Empfänger 2 eines Systems mit mehreren Stationen werden durch ein oder mehrere zentrale Koppelstellen 10 zentral aktiviert. Die Aktivierung und der anschließende Sendevorgang kann durch einen Sender 1 einer Teilnehmerstation veranlaßt werden.

Man kann auch für bestimmte Arbeitszeiten in bestimmten Zeitintervallen generell ein aktivierter Zustand gewählt werden. Durch die Verminderung der Betriebszeit im Vergleich zu einem System mit ständig eingeschalteten Komponenten wird entsprechend die Ausfallrate des Gesamtsystems deutlich gesenkt.

**Patentansprüche**

1.  Einrichtung der Gebäudesystemtechnik, wonach Stationen über Bus (5) Informationen senden und empfangen, gegebenenfalls auch Informationen von externen Befehlsgebern empfangen und gegebenenfalls Befehle an Arbeitsglieder abgeben,
    **dadurch gekennzeichnet,** daß dem Sender (1) und dem Empfänger (2) einer Station jeweils ein einfach aufgebauter Eingangskreis (3) nach dem Prinzip eines elektromechanischen oder elektronischen, gegebenenfalls mehrpoligen Schalters auf der Eingangsseite zum Bus (5) vorgeschaltet ist,
    - der beim Sender (1) mit zumindest einem Aktor (6) über einen Aktivierungsweg (7) verbunden ist und der mit dem Prozessor (4) der Station gegebenenfalls unmittelbar oder mittelbar über einen Quittierweg (8) verbunden ist
    - und der beim Empfänger (2) mit einer zentralen Koppelstelle (10) über einen Weg (12) für ein Vorsignal verbunden ist.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | IBM TECHNICAL DISCLOSURE BULLETIN Bd. 23, Nr. 7A, Dezember 1980, NEW YORK US Seiten 2886 - 2887; J.D. HILL ET AL: 'Auto-answer communicating typewriter with a power-saver feature ' * das ganze Dokument * --- | 1 | H04L12/12 H04L12/40 |
| Y | EP-A-369 382 (SONY CORPORATION) * Zusammenfassung; Abbildung 1 * ----- | 1 | |

RECHERCHIERTE SACHGEBIETE (Int. Cl.5 )

H04L

Der vorliegende Recherchenbericht wurde für alle Patentansprüche erstellt

| Recherchenort | Abschlußdatum der Recherche | Prüfer |
|---|---|---|
| DEN HAAG | 18 SEPTEMBER 1991 | PEREZ PEREZ J.C. |